# EUROPEAN PATENT SPECIFICATION

(11) **EP 0 648 394 B1**
(45) Date of publication and mention of the grant of the patent: **15.09.1999**
(21) Application number: 93914752.6
(22) Date of filing: 01.07.1993
(51) Int. Cl.: H04J 3/06

(54) **METHOD FOR RECEIVING A SIGNAL USED IN A SYNCHRONOUS DIGITAL TELECOMMUNICATION SYSTEM**
VERFAHREN ZUM EMPFANGEN EINES SIGNALS IN EINEM SYNCHRONEN DIGITALEN ÜBERTRAGUNGSSYSTEM
PROCEDE DE RECEPTION D'UN SIGNAL UTILISE DANS UN SYSTEME DE TELECOMMUNICATION NUMERIQUE SYNCHRONE

(30) Priority: 01.07.1992 FI 923061
(43) Date of publication of application: 19.04.1995
(73) Proprietor: NOKIA TELECOMMUNICATIONS OY, 02150 Espoo (FI)
(72) Inventor: KIVI-MANNILA, Arvi, FIN-02210 Espoo (FI); VIITANEN, Esa, FIN-02210 Espoo (FI); PATANA, Jari, FIN-01620 Vantaa (FI); OKSANEN, Toni, FIN-02600 Espoo (FI)
(74) Representative: Tomlinson, Kerry John
(86) International application number: FI9300278
(87) International publication number: WO9401946

(56) References cited:
- EP-A- 0 539 758
- EP-A- 0 548 414
- CCITT Blue Book, Recommendation G. 783: "Characteristics of Synchronous Digital Hierarchy (SDH) Multiplexing Equipment Functional Blocks", August 1990, Annex B, "Algorithm for Pointer Detection", pp. 53-55; see p. 53.
- Annex PI to ETS DE/TM1015, ETSI (European Telecommunications Standards Institute), 3 January 1992, pp. 1-3; see page 1, fig. 1.
- CCITT Blue Book, Recommendation G.709: "Synchronous Multiplexing Structure", Geneva 1989, pp. 121-174; see pp. 131-150.

## Description

The invention relates to a method according to the preamble of the accompanying claim 1 for receiving a signal used in a synchronous digital telecommunication system.

The current digital transmission network is plesiochronous, that is each 2-Mbit/s basic multiplex system has a dedicated clock independent of any other system. It is therefore impossible to locate a single 2-Mbit/s signal in the bit stream of a higher-order system, but the higher-level signal has to be demultiplexed through each intermediate level down to the 2 Mbit/s level to extract the 2-Mbit/s signal. For this reason, especially the construction of branch connections requiring several multiplexers and demultiplexers has been expensive. Another disadvantage of the plesiochronous transmission network is that equipments from two different manufacturers are not usually compatible.

The above drawbacks, among other things, have led to the introduction of the new synchronous digital hierarchy SDH specified in the CCITT recommendations G.707, G.708 and G.709. The synchronous digital hierarchy is based on STM-N transfer frames (Synchronous Transport Modules) located on several levels of hierarchy N (N=1,4,16...). Existing PCM systems, such as 2, 8- and 32-Mbit/s systems, are multiplexed into a synchronous 155.520-Mbit/s frame of the lowest level of the SDH (N=l). Consistently with the above, this frame is called the STM-1 frame. On the higher levels of hierarchy the bit rates are multiples of the bit rate of the lowest level. In principle, all nodes of the synchronous transmission network are synchronized into one clock. If some of the nodes should, however, lose connection with the common clock, it would lead to problems in the connections between the nodes. The phase of the frame must also be easy to recognize in the reception. For the reasons stated above, a pointer has been introduced in the SDH telecommunications, said pointer being a number which indicates the phase of the payload within the frame, i.e. the pointer indicates that byte in the STM frame from which the payload begins.

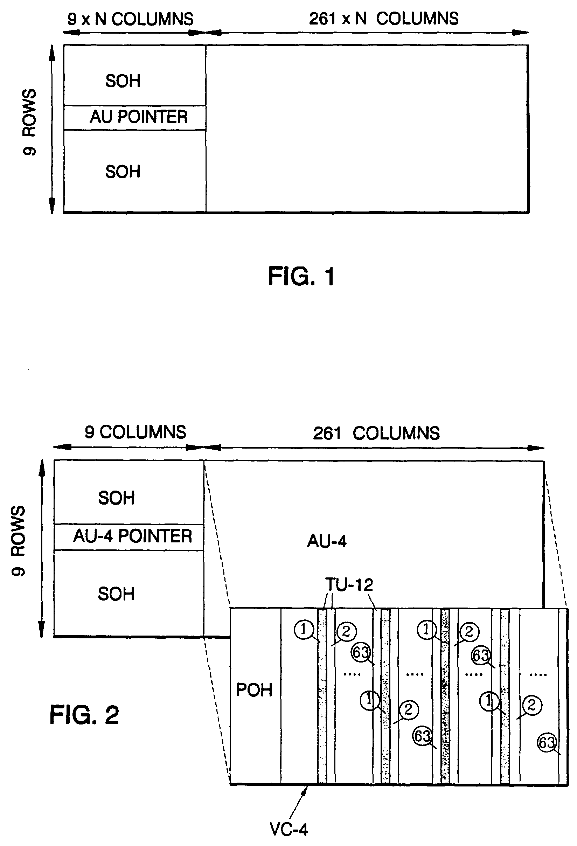

Figure 1 illustrates the structure of an STM-N frame, and Figure 2 illustrates a single STM-1 frame. The STM-N frame comprises a matrix with 9 rows and N x 270 columns so that there is one byte at the junction point between each row and the column. Rows 1-3 and rows 5-9 of the N x 9 first columns comprise a section overhead SOH, and row 4 comprises an AU pointer. The rest of the frame structure is formed of a section having the length of N x 261 columns and containing the payload section of the STM-N frame.

Figure 2 illustrates a single STM-1 frame which is 270 bytes in length, as described above. The payload section comprises one or more administration units AU. In the example shown in the figure, the payload section consists of the administration unit AU-4, into which a virtual container VC-4 is inserted. (Alternatively, the STM-1 transfer frame may contain three AU-3 units, each containing a corresponding virtual container VC-3). The VC-4 in turn consists of a path overhead POH located at the beginning of each row and having the length of one byte (9 bytes altogether), and of the payload section in which there are lower-level frames also comprising bytes allowing interface justification to be performed in connection with mapping when the rate of the information signal to be mapped deviates from its nominal value to some extent. (Mapping of the information signal into the transmission frame STM-1 is described e.g. in patent applications AU-B-34689/89 and FI-914746.

Each byte in the AU-4 unit has its own location number. The above-mentioned AU pointer contains the location of the first byte of the VC-4 container in the AU-4 unit. The pointers allow positive or negative pointer justifications to be performed at different points in the SDH network. If a virtual container having a certain clock frequency is applied to a network node operating at a clock frequency lower than the above-mentioned clock frequency of the virtual container, the data buffer will be filled up. This requires negative justification: one byte is transferred from the received virtual container into the overhead section while the pointer value is decreased by one. If the rate of the received virtual container is lower than the clock rate of the node, the data buffer tends to be emptied, which calls for positive justification: a stuff byte is added to the received virtual container and the pointer value is incremented by one.

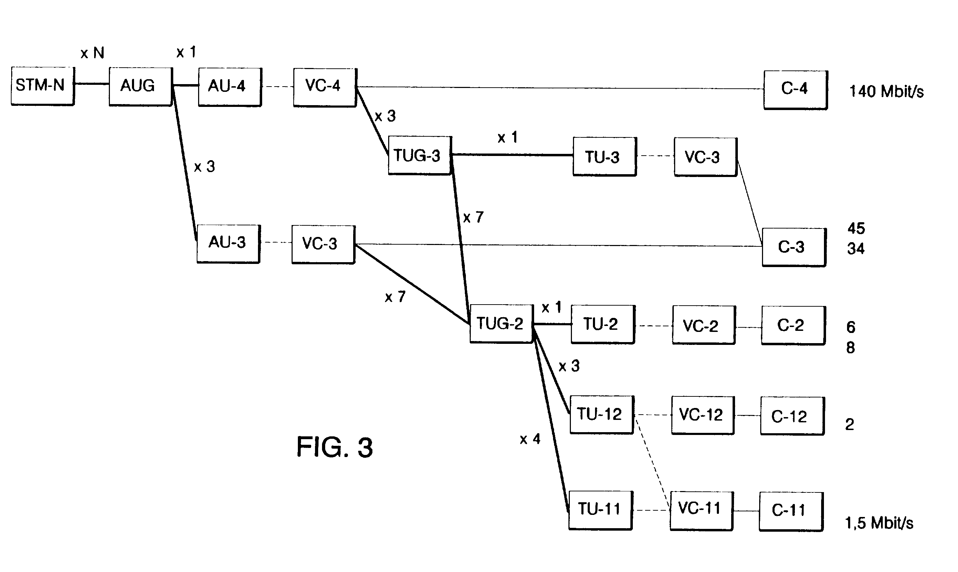

Figure 3 shows how the STM-N frame can be formed of existing bit streams. These bit streams (1.5, 2, 6, 8, 34, 45 or 140 Mbit/s, shown on the right in the figure) are packed at the first stage into containers C specified by CCITT. At the second stage, overhead bytes containing control data are inserted into the containers, thus obtaining the above-described virtual container VC-11, VC-12, VC-2, VC-3 or VC-4 (the first suffix in the abbreviations represents the level of hierarchy and the second suffix represents the bit rate). This virtual container remains intact while it passes through the synchronous network up to its point of delivery. Depending on the level of hierarchy, the virtual containers are further formed either into so-called tributary units TU or into AU units (AU-3 and AU-4) already mentioned above by providing them with pointers. The AU unit can be mapped directly into the STM-1 frame, whereas the TU units have to be assembled through tributary unit groups TUG and VC-3 and VC-4 units to form AU units which then can be mapped into the STM-1 frame. In Figure 3, the mapping is indicated by a continuous thin line, the aligning with a broken line, and the multiplexing with a continuous thicker line.

As is to be seen from Figure 3, the STM-1 frame may be assembled in a number of alternative ways, and the content of the highest-level virtual container VC-4, for instance, may vary, depending on the level from which the assembly has been started and in which way the assembly has been performed. The STM-1 signal may thus contain e.g. 3 TU-3 units or 21 TU-2 units or 63 TU-12 units, or a combination of some of the above-mentioned units. As the higher-level unit contains several lower-level units, e.g. the VC-4 unit contains TU-12 units (there are 63 such units in a single VC-4 unit, cf. Figure 3), the lower-level units are mapped into the higher-level frame by interleaving so that the first bytes are first taken consecutively from each one of the lower-level units, then the second bytes, etc. The example of Figure 2 shows with circled numbers how the VC-4 unit contains at first consecutively the first bytes of all 63 TU-12 units, then the second bytes of all 63 TU-12 units, etc.

The above-described SDH frame structures and the assembly of such structures have been described e.g. in References [1] and [2], which are referred to for a more detailed description (the references are listed at the end of the specification).

The above-mentioned pointer mechanism allows flexible phase shift of different units within the STM frame and also reduces the size of buffer memories required in the network. In principle, the SDH system comprises pointers on two levels: AU pointers and TU pointers, which indicate the first byte of a virtual container VC within the AU or TU unit, respectively. The CCITT specifications relating to the pointer are set forth in Reference [1], which is referred to for a more detailed description.

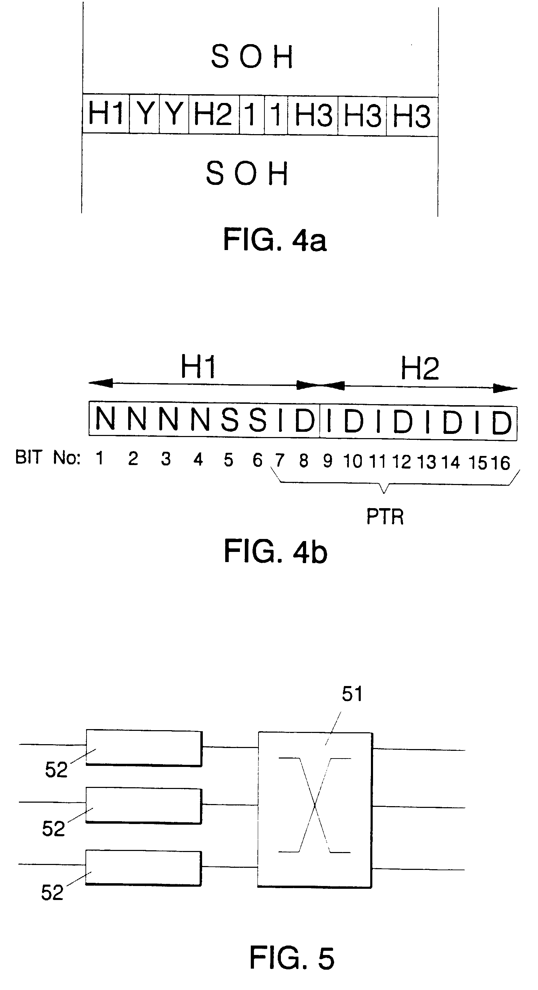

As shown in Figure 4a, the AU-4 pointer, for example, consists of nine successive bytes H1, Y, Y...H3, of which the bytes H1 and H2 are shown separately in Figure 4b. The actual pointer value PTR consists of the ten last bits (bits 7 to 16) of the word formed by bytes H1 and H2. Correspondingly, the value of the TU pointer consists of the ten last bits of the word formed by bytes V1 and V2. The AU and TU pointers have quite similar coding even in other respects; there are, however, some differences, which will be described in the following.

First, the pointer value must be within a certain range in order to be acceptable. The acceptable decimal value of the AU-4 pointer is from 0 to 782, and the acceptable decimal value of the TU-12 pointer, for example, is from 0 to 139. These values are called offset values, as they (within the frame structure) indicate the offset between the first byte of the pointer and that of the corresponding virtual container. Second, in order for the value "new" for the new data flag (NDF_enable) defined by the N-bits (bits 1 to 4) to be acceptable, three bits should be identical in the AU pointer, and all bits should be identical in the TU pointer. The new data flag NDF allows arbitrary changes in the pointer value if they are the result of a change taking place in the payload. Normal operation (NDF_disabled) is indicated by the N-bit values "0110", and the new pointer value (NDF_enable) by the N-bit values "1001" (i.e. by inverting the bits of the normal state). In this way the new data flag, together with the new pointer value, indicates a change in the alignment of the virtual container within the frame, if the change is caused by some other reason than positive or negative justification (the transmitter may force a new alignment on the virtual container within the frame structure).

The I- and D-bits of the 10-bit pointer word are used to indicate the positive and negative justification described above. If at least three out of five increment bits, or I-bits (bits 7, 9, 11, 13 and 15), are inverted, it signifies positive justification (if certain additional conditions are met).

If at least three out of five decrement bits, or D-bits (bits 8, 10, 12, 14, 16), are inverted, it signifies negative justification (if certain additional conditions are met).

The pointer counters used in the receiver are modulo counters, i.e. when the value reaches its upper limit, the counter starts over again.

If the new data flag indicates a new pointer value (NDF_enable), and the pointer value consists of one bits (i.e. if bits 1 to 16 are "1001SSllllllllll" wherein the S-bits may be independently of one another one or zero), it signifies concatenation. Concatenation means that e.g. AU-4 units are concatenated into one larger unit (so-called AU-4-Xc), which may transfer payloads which require a higher capacity than the C-4 container. (Correspondingly, TU-2 units can be concatenated into a larger unit capable of transferring greater payloads than the capacity of the C-2 container).

If all of the bits 1 to 16 are ones, it signifies alarm (AIS, Alarm Indication Signal).

The S-bits (bits 5 and 6) indicate on which level of hierarchy (shown in Figure 3; e.g. TU-12) the operation is currently taking place.

In the present situation it is problematic that the recommendations do not specify the pointer interpretation rules in an accurately defined and unambiguous form, but choices not specified in the recommendations must be made in the interpretation process. Particularly the interpretation of invalid pointers has been defined unclearly. This fact has been acknowledged, and the interpretation of invalid pointers has already been specified in ETSI (European Telecommunication Standards Institute) recommendation TM1015 (January 3, 1992). Because of the recommendations, an invalid pointer is very easily interpreted as a new pointer transmitted by the new data flag, or as a new pointer indicating the justification of the active pointer. This leads to the fact that in the case of an invalid pointer the receiver does not achieve the LOP (loss of pointer) state. As the network management must, however, be informed of error situations (invalid pointer) as soon as possible, the receiver should enter into the LOP state when necessary in order that information of the error situation could be immediately transmitted further.

The object of the present invention is to remedy the drawbacks described above without breaking the interpretation rules set forth in CCITT recommendation G.709. This is achieved with a method of the invention, which is characterized by what is disclosed in the characterizing part of the accompanying claim 1.

The idea of the invention is to define an invalid pointer at least in the normal state in such a manner that sporadic bursts of errors or corresponding error situations do not make the pointer appear as a pointer of an acceptable state. In this way it is ensured that e.g. transition to the LOP state is not delayed because a burst of errors makes the pointer appear erroneously as acceptable, in which case the receiver resets the counter of the invalid pointer, delaying thus the transition to the LOP state. The fact that in the normal state e.g. the cases where a new pointer, increment data or decrement data is received are interpreted as an invalid pointer does not pose any problems, as the LOP state will not be proceeded to until a certain number of successive invalid pointers has been received.

The method of the invention provides a pointer interpretation process carried out by the receiver in such a manner that information on the loss of synchronization is received in time, and the transition of the receiver to the LOP state in error situations is ensured and expedited. By means of the method of the invention it is also possible to further improve the fault tolerance of the network, and thus prolong the average life time of the network.

In the following the invention will be described in greater detail by way of example with reference to Figures 5 to 7 in the attached drawings, in which
Figure 1 shows the basic structure of a single STM-N frame,
Figure 2 shows the structure of a single STM-1 frame,
Figure 3 shows the assembly of the STM-N frame from existing PCM systems,
Figure 4a shows the AU-4 pointer in greater detail,
Figure 4b shows the bytes H1 and H2 of the AU-4 pointer illustrated in Figure 4a,
Figure 5 is a block diagram of an SDH cross-connect equipment in the synchronizing units of which the method of the invention can be employed,
Figure 6 is a state diagram illustrating the main states of the receiver and transitions taking place in the different states, and
Figures 7A and 7B show a flow diagram of the pointer interpretation process of the invention.

Figure 5 shows a part of the SDH network in which the method of the invention can be employed. This part is a synchronizing unit 52 of an SDH cross-connect equipment 51. In this synchronizing unit 52 the payload of the signal coming to the cross-connect equipment 51 is stored in an elastic buffer in synchronization with a clock signal extracted from the incoming signal and is read from the elastic buffer in synchronization with the clock signal of the cross-connect equipment. For example, a signal containing 63 TU-12 signals and having the STM-1 frame structure is first applied in the synchronizing unit 52 to a common AU interpretation unit, which interprets the AU pointer data and the H4 byte in the path overhead (POH) of the VC-4 container so as to locate the TU-12 frames included in the frame structure. Thereafter the interpretation unit forwards the bytes of each one of the TU-12 channels to the dedicated TU interpretation unit, of which there are thus typically 63 in this conventional example. The TU interpretation unit interprets the pointer of each TU-12 channel to determine the phase of the VC-12 signal. The above-mentioned synchronizing unit is described more closely in Finnish Patent Applications No. 922567-922569, which also disclose a solution by means of which 63 parallel interpretation units can be avoided. As the structure of the synchronizing unit does not fall within the scope of the present invention, reference is made to the above-mentioned patent applications for a more detailed description. It should be noted, however, that the method of the invention can be employed in both the known and the new solution which are both disclosed in the above-mentioned applications.

In addition to the synchronizing unit described above, the method of the invention can also be employed in line interfaces of the SDH network, e.g. in a 2 Mbit/s line interface unit, where 2 Mbit/s channels are extracted from the frame structure, or e.g. in an STM-1 interface unit.

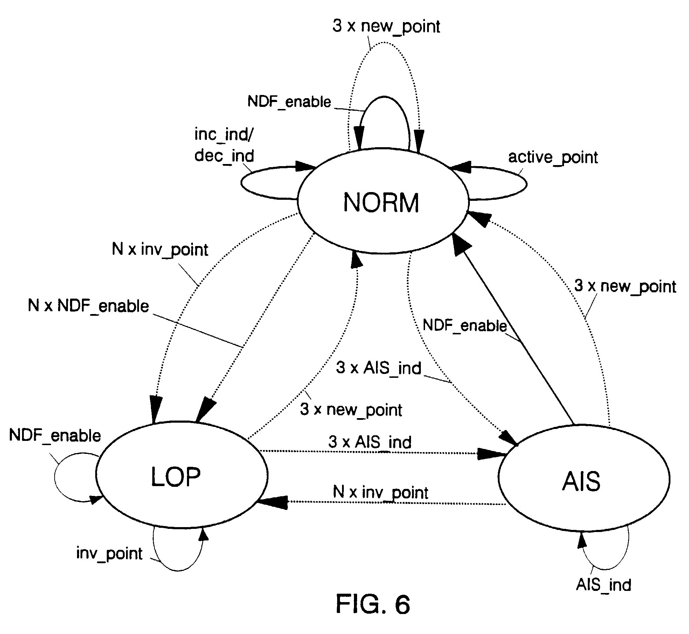

The pointer interpretation effected in the receiver can be illustrated according to Figure 6 as a state diagram in which the interpretation equipment of the receiver has three possible main states: the normal state NORM, the alarm state AIS (Alarm Indication Signal), and the above-described LOP (Loss of Pointer) state. The events possible in these states are thus the result of interpretation of the received pointer and are shown for each state in the following three tables.

| **NORM state event** | **Definition** |
|---|---|
| active_point (active | The new data flag (NDF) has |
| pointer) | the value "normal" (NDF_dis- |
| | abled) and the offset value |
| | is within the acceptable |
| | range and equal to the valid |
| | offset value. |
| new_point (new pointer) | The new data flag has the |
| | value "normal" (NDF_dis- |
| | abled) and the offset value |
| | is within the acceptable |
| | range and unequal to the |
| | valid offset value. |
| NDF_enable (new data | The new data flag has the |
| flag) | value "new" (NDF_enable),and |
| | the offset value is within |
| | the acceptable range. |
| AIS_ind (AIS alarm) | The 16-bit pointer word has |
| | the value "1111 1111 1111 |
| | 1111". |
| inc_ind (increment data) | The new data flag has the |
| | value "normal" (NDF_dis- |
| | abled), and the majority of |
| | I-bits are inverted, and the |
| | majority of D-bits are not |
| | inverted. |
| dec_ind (decrement data) | The new data flag has the |
| | value "normal" (NDF_dis- |
| | abled), and the majority of |
| | D-bits are inverted, and the |
| | majority of I-bits are not |
| | inverted. |
| NORM_inv_point (invalid | If AIS alarm, the value |
| pointer of the NORM | "new" for the new data flag |
| state) | (NDF_enable) or the active |
| | pointer (active_point) is |
| | not received. |

| **AIS state event** | **Definition** |
|---|---|
| active_point (active | not defined |
| pointer) | |
| new_point (new pointer) | The new data flag (NDF) has |
| | the value "normal" (NDF_dis- |
| | abled), and the offset value |
| | is within the acceptable |
| | range. |
| NDF_enable (new data | The new data flag has the |
| flag) | value "new" (NDF_enable), and |
| | the offset value is within the |
| | acceptable range. |
| AIS_ind (AIS alarm) | The 16-bit pointer word has |
| | the value "1111 1111 1111 |
| | 1111". |
| inc_ind (increment data) | not defined |
| dec_ind (decrement data) | not defined |
| AIS_inv_point (invalid | (I) If AIS alarm and the value |
| pointer of the AIS | "new" for the new data flag |
| state) | (NDF_enable) are not received, |
| | or (II) if AIS alarm is not |
| | received. |

| **LOP state event** | **Definition** |
|---|---|
| active_point (active | not defined |
| pointer) | |
| new_point (new pointer) | The new data flag has the |
| | value "normal" (NDF_disabled) |
| | and the offset value is |
| | within the acceptable range. |
| NDF_enable (new data | The new data flag has the |
| flag) | value "new" (NDF_enabled), |
| | and the offset value is |
| | within the acceptable range. |
| AIS_ind (AIS alarm) | The 16-bit pointer word has |
| | the value "1111 1111 1111 |
| | 1111". |
| inc_ind (increment data) | not defined |
| dec_ind (decrement data) | not defined |
| LOP_inv_point (invalid | (I) The counter of the inva- |
| pointer of the LOP | lid pointer is not updated at |
| state) | all, or (II) all pointer |
| | values that are unequal to |
| | the AIS alarm, or (III) all |
| | pointer values that are un- |
| | equal to the AIS alarm and |
| | the value "new" for the new |
| | data flag. |

As can be seen from the above tables, the above-mentioned bytes H1 and H2 (bits 1 to 16) of the pointer can indicate up to seven different events. According to the invention, the invalid pointer is defined separately in each main state. In the normal state the events in which an AIS alarm, the value "new" for the new data flag (NDF_enable) or the active pointer (active_point) is not received are considered an invalid pointer. In other words, in the normal state the events in which a new pointer (new_point), increment data (inc_ind), decrement data (dec_ind) or concatenation data (conc_ind) is received, or the events in which the offset value of the pointer is not within the acceptable range are considered, according to the invention, an invalid pointer. This definition of the normal state improves the detectability of an error in the system, as stated above. With this definition of the normal state, slightly different operations take place in the alarm state and the LOP state:

In the alarm state the events in which (1) an AIS alarm is not received, or (2) an AIS alarm and the value "new" for the new data flag (NDF_enable) are not received are considered as invalid pointers. In the LOP state (1) the counter of the invalid pointer is not updated at all (as the LOP state has already been proceeded to), or (2) the events in which an AIS alarm (AIS_ind) is not received are considered as invalid pointers, or (3) the events in which an AIS alarm (AIS_ind) or the value "new" for the new data flag (NDF_enable) are not received are considered as invalid pointers.

The transition of the receiver between the different main states and to another internal state within a main state is controlled in practice by means of counters as defined in the following table. The index (N or 3) at the beginning of the name of the counter indicates the maximum value of the counter.

| **COUNTER** | **OPERATION** |
|---|---|
| N x NDF_enable (NDF | Counts successive NDF_enable |
| counter) wherein (N= | events and controls transition |
| 8...10) | from NORM state to LOP state. |
| 3 x new_point (counter | Counts successive new_point |
| of the new pointer) | events and controls transition |
| | from LOP and AIS states to |
| | NORM state, and from NORM |
| | state to NORM state (change in |
| | the offset value). |
| N x inv_point (counter | Counts successive inv_point |
| of an invalid pointer) | events and controls transition |
| | from NORM and AIS states to |
| | LOP state. |
| 3 x AIS_ind (alarm | Counts successive AIS_ind |
| counter) | events and controls transition |
| | from NORM and LOP states to |
| | AIS state. |

When the counter reaches its maximum value, the following operations are performed in the different states:
1. NORM state
   - N x NDF_enable: transition to LOP state,
   - 3 x new_point: transition to NORM state (change in the offset value),
   - N x inv_point: transition to LOP state,
   - 3 x AIS_ind: transition to AIS state.
2. LOP state
   - N x NDF_enable: irrelevant,
   - 3 x new_point: transition to NORM state,
   - N x inv_point: irrelevant,
   - 3 x AIS_ind: transition to AIS state.
3. AIS state
   - N x NDF_enable: irrelevant,
   - 3 x new_point: transition to NORM state,
   - N x inv_point: transition to LOP state,
   - 3 x AIS_ind: irrelevant.

The offset value of three successive new pointers must be equal, otherwise the counter of the new pointer is reset. In practice, N has a value of from 8 to 10.

If an invalid pointer is received, the counter of the invalid pointer is incremented by one, otherwise the error counter is reset. If the counter of the invalid pointer reaches its maximum value, the LOP state is proceeded to from the normal and alarm state. According to the invention, each justification function (inc_ind or dec_ind), for example, interpreted in the normal state increments the number of invalid pointers by one in the same way as each new pointer (new_point) interpreted in the normal state.

In Figure 6 the transitions described above are indicated by broken lines. Figure 6 also illustrates reception of a single new data flag (together with an acceptable pointer value) in the alarm state, which leads to transition to the normal state NORM. This is the only single event which causes transition from one main state to another.

In addition, Figure 6 illustrates the changes occurring within the normal state. Such changes are (1) reception of increment or decrement data (inc_ind/dec_ind), and (2) reception of a single new data flag (both of these cause a change in a manner known per se in the offset value in the normal state), and (3) reception of the active pointer (active_point). The figure also illustrates internal changes occurring in the AIS and LOP states.

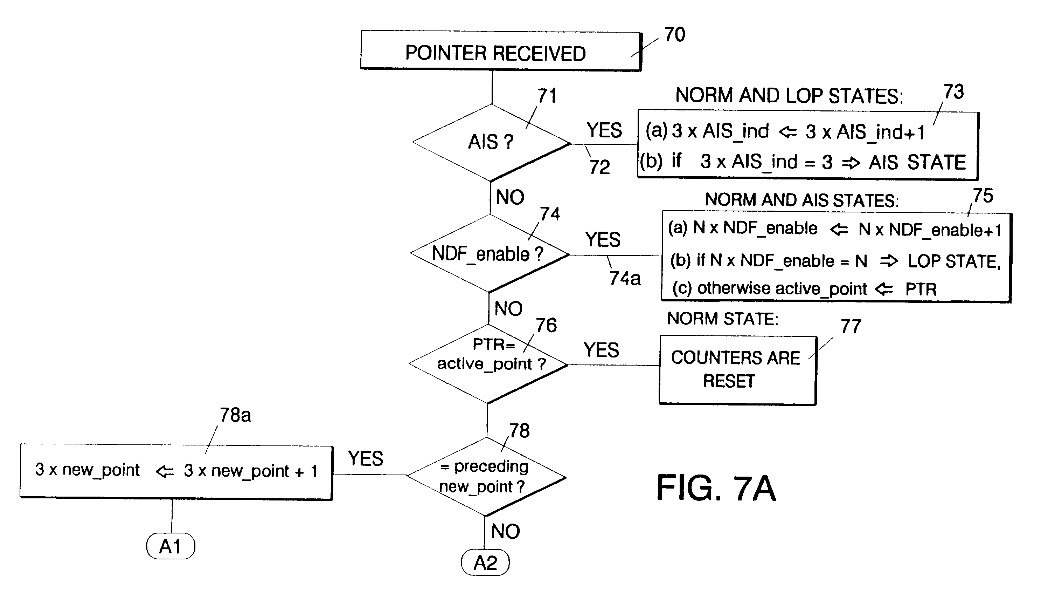

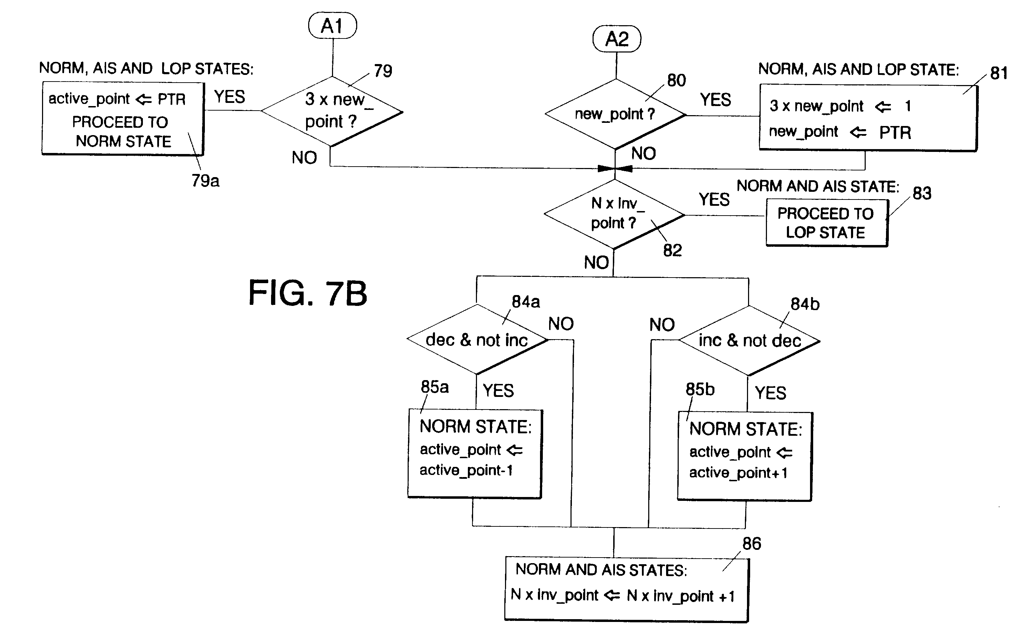

In the following the pointer interpretation process is described in greater detail with reference to the corresponding parts of the flow diagram shown in Figures 7A and 7B.

At first the receiver receives a frame structure according to the SDH system, and the pointer data are extracted from said frame structure in a manner known per se (step 70).

1. In step 71 it is tested whether the above-mentioned 16-bit pointer word consists of ones only. If this is the case, the pointer value is interpreted as an AIS alarm (step 72).

In the NORM state the active pointer is retained, and the alarm counter is incremented by one (3 x AIS_ind ⇐ 3 x AIS_ind + 1, step 73(a)). The NDF counter, the counter of the invalid pointer and that of the new pointer are reset. If the alarm counter reaches its upper limit (3), the alarm state (AIS) is proceeded to, and the alarm counter can be reset (step 73(b)).

No transition takes place in the AIS state. The alarm and NDF counters are not relevant, wherefore they can be reset. The counter of the new pointer and that of the invalid pointer are reset.

In the LOP state the alarm counter is incremented by one (3 x AIS_ind ⇐ 3 x AIS_ind + 1, step 73a), and the counter of the new pointer is reset. The counter of the invalid pointer and the NDF counter are not relevant, wherefore they can be reset. If the alarm counter reaches its upper limit, the alarm state (AIS) is proceeded to, and the alarm counter can be reset (step 73(b)).

2. The S-bits (Figure 4b, bits 5 and 6) are verified only in step 71.

3. In step 74 the value of the new data flag (NDF) is verified. If said value NDF = "1001" (the TU pointer is required to have full correspondence in the manner described above, and the AU pointer is required to have 3-bit correspondence, i.e. one of the values "1001", "1000", "1011", "1101" and "0001") and the 10-bit pointer value PTR is within the acceptable offset range, the event is interpreted as a new data flag (NDF_enable) (step 74(a)).

In the NORM state the NDF counter is in this case incremented by one (N x NDF_enable ⇐ N x NDF_enable + 1, step 75(a)), and the counter of the new pointer, the alarm counter and the counter of the invalid pointer are reset. If the NDF counter reaches its upper limit (N), the LOP state is proceeded to, and the NDF counter is reset (step 75(b)). If the NDF counter has not reached its upper limit, the value of the active pointer is updated as the value of the new pointer (step 75(c)).

In the AIS state even a single NDF_enable event causes immediate transition to the NORM state. The new pointer becomes then the active pointer (step 75(c)), and all counters are reset.

In the LOP state no transitions take place. The NDF counter and the counter of the invalid pointer are irrelevant, wherefore they can be reset. The counter of the new pointer and the alarm counter are reset as well.

4. If in step 74 the examined NDF word is one of the words included in the following tables, the situation is interpreted as normal (NDF_disabled), and the 10-bit pointer value PTR is interpreted according to the following subrules 4.1 to 4.2.3.

| AU-NDF | TU-NDF |
|---|---|
| 0000 | 0000 |
| 0010 | 0001 |
| 0011 | 0010 |
| 0100 | 0011 |
| 0101 | 0100 |
| 0110 (normal) | 0101 |
| 0111 | 0110 (normal) |
| 1010 | 0111 |
| 1100 | 1000 |
| 1110 | 1010 |
| 1111 | 1011 |
| | 1100 |
| | 1101 |
| | 1110 |
| | 1111 |

4.1 This subrule is valid only in the NORM state, as the active pointer is undefined in the AIS and LOP states. In the case of the AIS or LOP states, subrule 4.2 is directly proceeded to.

If it is found out in the test carried out in step 76 that the 10-bit pointer value PTR is identical with the value of the active pointer, the event in question in the state diagram is an event concerning the active pointer, which is a normal event and in practice by far the commonest event. All counters described above are reset, but nothing else is changed (step 77).

4.2 If the 10-bit pointer value PTR differs from the value of the active pointer, or if the active pointer is undefined (AIS and LOP states), the following steps are taken:

4.2.1 If the pointer value is within the acceptable range, it is verified whether the same value was detected in the preceding pointer (step 78).

If the answer is positive, the counter of the new pointer is incremented by one (step 78a). Thereafter in step 79 (Figure 7B) it is tested whether the counter of the new pointer has reached its upper limit (3). If this is the case, the NORM state is proceeded to, the value of the new pointer is accepted, and all counters are reset except for the counter of the invalid pointer. In the NORM state this involves only a change in the offset value (step 79(a)).

If the answer is negative, the new pointer value is interpreted as having been received (step 80), the counter of the new pointer is reset and incremented by one. The new pointer value is stored (step 81).

In the NORM state the counter of the invalid pointer is incremented by one according to the invention, and the NDF counter and the alarm counter are reset. Thereafter in step 82 it is tested whether the counter of the invalid pointer has reached its upper limit (N). If this is the case, the LOP state is proceeded to, and the counter of the invalid pointer can be reset (step 83).

Likewise in the AIS state the counter of the invalid pointer is incremented by one. The NDF counter and the alarm counter are irrelevant, wherefore they can be reset. If it is found out in step 82 that the counter of the invalid pointer has reached its upper limit, the LOP state is proceeded to, and the counter of the invalid pointer can be reset (step 83).

In the LOP state the alarm counter is reset. The counter of the invalid pointer and the NDF counter are irrelevant, wherefore they can be reset (not shown in the figure).

4.2.2 This subrule is valid only in the NORM state, as the value of the active pointer is undefined in the AIS and LOP states. In the case of the AIS or LOP state, item 5 is directly proceeded to.

If the majority (3, 4 or 5) of the five I-bits is inverted as compared with the active pointer, and the majority (3, 4 or 5) of the five D-bits is not inverted, it is interpreted according to the invention in step 84b that increment data (inc_ind) is concerned, whereby the counter of the active pointer is incremented by one (step 85b). The NDF counter and the alarm counter are reset, and the counter of the invalid pointer is incremented by one (step 86). If the offset value is within the acceptable range, the counter of the new pointer is updated according to item 4.2.1 (NORM state), otherwise it is reset.

4.2.3 This subrule is valid only in the NORM state, as the value of the active pointer is undefined in the AIS and LOP states. In the case of the AIS or LOP state, item 5 is directly proceeded to.

If the majority (3, 4 or 5) of the five D-bits is inverted as compared with the active pointer, and the majority (3, 4 or 5) of the five I-bits is not inverted, it is interpreted according to the invention in step 84a that decrement data (dec_ind) is concerned, whereby the counter of the active pointer is decremented by one (step 85a). The NDF counter and the alarm counter are reset, and the counter of the invalid pointer is decremented by one (step 86). If the offset value is within the acceptable range, the counter of the new pointer is updated according to item 4.2.1 (NORM state), otherwise it is reset.

5. If none of items 1, 3 or 4 is valid, the pointer is interpreted as being invalid (inv_point).

In the NORM state the counter of the invalid pointer is incremented; the counter of the new pointer, the alarm counter, and the NDF counter are reset (step 86). If the counter of the invalid pointer reaches its upper limit (N), the LOP state is proceeded to, whereby said counter can be reset.

In the AIS state the counter of the invalid pointer is incremented by one, and the counter of the new pointer is reset. The alarm counter and the NDF counter are irrelevant and can be reset. If the counter of the invalid pointer reaches its upper limit, the LOP state is proceeded to, and said counter can be reset.

In the LOP state there are no transitions. The counter of the new pointer and the alarm counter are reset. The counter of the invalid pointer and the NDF counter are irrelevant and can be reset.

6. In the case of the NORM state, increment data (inc_ind), decrement data (dec_ind) and NDF_enable events are accepted, as stated above, every time they are detected, even if they occur successively. In the AIS state an NDF_enable event is accepted every time it is detected.

7. Concatenation is examined, and information concerning it is transmitted further, if necessary. In the interpretation of the pointer, concatenation is treated as an invalid pointer, which leads to transition to the LOP (loss of pointer) state if the concatenation information appears during a predetermined number (N) of frames.

The pointer interpretation process described above is also disclosed in a co-pending FI patent application with the same filing date as the present application. This application relates more closely to the acceptance of justification functions in the pointer interpretation process.

Even though the invention has been described above with reference to the examples shown in the attached drawings, it is obvious that the invention is not restricted to them but may be modified in various ways within the inventive idea disclosed above and in the accompanying claims. Even though SDH specific terms have been used above by way of example, the invention is equally applicable e.g. in the corresponding American SONET system or in any other similar system in which the frame structure comprises a predetermined number of bytes of fixed length, and in which the frame structure comprises a pointer indicating the phase of the payload within the frame structure.

References:
[1] CCITT Blue Book, Recommendation G.709: "Synchronous Multiplexing Structure", May 1990.
[2] SDH - Ny digital hierarki, TELE 2/90.
[3] CCITT Blue Book, Recommendation G.783: "Characteristics of Synchronous Digital Hierarchy (SDH) Multiplexing Equipment Functional Blocks," August 1990, Annex B.

## Claims

1. A method for receiving a signal used in synchronous digital telecommunication system, such as the SDH or SONET system, said signal having a frame structure comprising a predetermined number of bytes of fixed length and a pointer indicating the phase of payload within the frame structure, said method comprising pointer interpretation in which the receiver has three possible main states, between which it undergoes transitions under the control of event counters, the main states being a normal state (NORM), a loss of pointer state (LOP) and an alarm state (AIS), said counters counting predetermined events in each main state, said events comprising reception of alarm data (AIS_ind) indicating an alarm, reception of a new data flag indicating a new pointer value (NDF_enable), reception of the active pointer (active_point), and reception of an invalid pointer (inv_point), **characterized** in that in the normal state (NORM) all the pointers which do not indicate an alarm, a new data flag or the active pointer are considered invalid.

2. A method according to claim 1, **characterized** in that in the alarm state (AIS) all the pointers which do not indicate an alarm are considered invalid.

3. A method according to claim 1, **characterized** in that in the loss of pointer state (LOP) the counter of an invalid pointer is not updated at all.

4. A method according to claim 1, **characterized** in that in the alarm state (AIS) all the pointers which do not indicate an alarm or a new data flag are considered invalid.

5. A method according to claim 1, **characterized** in that in the loss of pointer state (LOP) all the pointers which do not indicate an alarm (AIS_ind) are considered invalid.

6. A method according to claim 1, **characterized** in that in the loss of pointer state (LOP) all the pointers which do not indicate an alarm (AIS_ind) or the value "new" for the new data flag (NDF_enable) are considered invalid.

## Patentansprüche

1. Verfahren zum Empfangen eines bei einem synchronen digitalen Übertragungssystem wie dem SDH- oder SONET-System verwendeten Signals mit einer Rahmenstruktur mit einer vorbestimmten Byte-Anzahl fester Länge und einem die Nutzlastphase in der Rahmenstruktur anzeigenden Zeiger, wobei das Verfahren eine Zeigerinterpretation aufweist, bei der der Empfänger drei mögliche Hauptzustände einnehmen kann, zwischen denen er unter der Steuerung von Ereigniszählern übergeht, wobei die Hauptzustände ein Normalzustand (NORM), ein Zeigerverlustzustand (LOP) und ein Alarmzustand (AIS) sind, die Zähler vorbestimmte Ereignisse in jedem Hauptzustand zählen, und die Ereignisse ein Empfangen von einen Alarm anzeigenden Alarmdaten (AIS_ind), ein Empfangen eines einen neuen Zeigerwert anzeigenden neuen Datenflags (NDF_enable), ein Empfangen des aktiven Zeigers (active_point) und ein Empfangen eines ungültigen Zeigers (inv_point) umfassen,
**dadurch gekennzeichnet, daß**
im Normalzustand (NORM) alle Zeiger, die keinen Alarm, kein neues Datenflag und nicht den aktiven Zeiger anzeigen, als ungültig betrachtet werden.

2. Verfahren nach Anspruch 1, **dadurch gekennzeichnet, daß**
im Alarmzustand (AIS) alle Zeiger, die keinen Alarm anzeigen, als ungültig betrachtet werden.

3. Verfahren nach Anspruch 1, **dadurch gekennzeichnet, daß**
im Zeigerverlustzustand (LOP) der Zähler eines ungültigen Zeigers überhaupt nicht aktualisiert wird.

4. Verfahren nach Anspruch 1, **dadurch gekennzeichnet, daß**
im Alarmzustand (AIS) alle Zeiger, die keinen Alarm und kein neues Datenflag anzeigen, als ungültig betrachtet werden.

5. Verfahren nach Anspruch 1, **dadurch gekennzeichnet, daß**
im Zeigerverlustzustand (LOP) alle Zeiger, die keinen Alarm (AIS_ind) anzeigen, als ungültig betrachtet werden.

6. Verfahren nach Anspruch 1, **dadurch gekennzeichnet, daß**
im Zeigerverlustzustand (LOP) alle Zeiger, die keinen Alarm (AIS_ind) und nicht den Wert "neu" für das neue Datenflag (NDF_enable) anzeigen, als ungültig betrachtet werden.

## Revendications

1. Procédé pour recevoir un signal utilisé dans un système de télécommunication numérique synchrone, tel que le système SDH ou SONET, ledit signal ayant une structure de trame comprenant un nombre prédéterminé d'octets de longueur fixe et un pointeur indiquant la phase de données utiles dans la structure de trame, ledit procédé comprenant une interprétation du pointeur dans laquelle le récepteur a trois états principaux possibles, entre lesquels il subit des transitions sous le contrôle de compteurs d'événements, les états principaux étant un état normal (NORM), un état de perte de pointeur (LOP) et un état d'alarme (AIS), lesdits compteurs comptant des événements prédéterminés dans chaque état principal, lesdits événements comprenant la réception de données d'alarme (AIS_ind) indiquant une alarme, la réception d'un indicatcur de nouvelles données indiquant une nouvelle valeur de pointeur (NDF_enable), la réception du pointeur actif (active_point) et la réception d'un pointeur invalide (inv_point), caractérisé en ce que, dans l'état normal (NORM), tous les pointeurs qui n'indiquent pas une alarme, un indicateur de nouvelles données ou le pointeur actif sont considérés comme invalides.

2. Procédé selon la revendication 1, caractérisé en ce que, dans l'état d'alarme (AIS), tous les pointeurs qui n'indiquent pas une alarme sont considérés comme invalides.

3. Procédé selon la revendication 1, caractérisé en ce que, dans l'état de perte de pointeur (LOP), le compteur d'un pointeur invalide n'est pas du tout actualisé.

4. Procédé selon la revendication 1, caractérisé en ce que, dans l'état d'alarme (AIS), tous les pointeurs qui n'indiquent pas une alarme ou un indicateur de nouvelles données sont considérés comme invalides.

5. Procédé selon la revendication 1, caractérisé en ce que, dans l'état de perte de pointeur (LOP), tous les pointeurs qui n'indiquent pas une alarme (AIS_ind) sont considérés comme invalides.

6. Procédé selon la revendication 1, caractérisé en ce que, dans l'état de perte de pointeur (LOP), tous les pointeurs qui n'indiquent pas une alarme (AIS_ind) ou la valeur "nouvelle" pour l'indicateur de nouvelles données (NDF_enable) sont considérés comme invalides.
